# FASCICULE DE BREVET EUROPEEN

(11) **EP 1 268 629 B1**
(45) Date de publication et mention de la délivrance du brevet: **23.05.2007**
(21) Numéro de dépôt: 01917201.4
(22) Date de dépôt: 21.03.2001
(51) Int. Cl.: C08K 3/22, C08K 3/36, C08K 7/00

(54) **COMPOSITIONS A BASE DE POLYESTERS PRESENTANT DES PROPRIETES THERMOMECANIQUES AMELIOREES ET PROCEDE DE FABRICATION DE CES COMPOSITIONS**
AUF POLYESTER BASIERENDE ZUSAMMENSETZUNGEN MIT VERBESSERTEN THERMOMECHANISCHEN EIGENSCHAFTEN SOWIE VERFAHREN ZUR HERSTELLUNG DIESER ZUSAMMENSETZUNGEN
COMPOSITIONS BASED ON POLYESTERS EXHIBITING IMPROVED THERMOMECHANICAL PROPERTIES AND METHOD FOR MAKING SAME

(30) Priorité: 29.03.2000 FR 0003965
(43) Date de publication de la demande: 02.01.2003
(73) Titulaire: Tergal Fibres, 02430 Gauchy (FR); Lepage, Jean-Luc, 69340 Francheville (FR)
(72) Inventeur: LEPAGE, Jean-Luc, F-69340 Francheville (FR)
(74) Mandataire: Esson, Jean-Pierre
(86) Numéro de dépôt international: PCT/FR2001/000845
(87) Numéro de publication internationale: WO 2001/072882

(56) Documents cités:
- EP-A- 0 401 689
- WO-A-98/01346
- DATABASE WPI Section Ch, Week 200008 Derwent Publications Ltd., London, GB; Class A23, AN 2000-092715 XP002152079 & JP 11 335542 A (TEIJIN LTD), 7 décembre 1999 (1999-12-07)

## Description

La présente invention concerne des compositions à base de polyester présentant des propriétés thermomécaniques améliorées, comportant des particules minérales de faible taille. Ces compositions sont notamment utiles pour la fabrication de bouteilles. La présente invention concerne également un procédé de fabrication de ces compositions.

Les polyesters, notamment le polyéthylène téréphtalate, sont des polymères thermoplastiques largement utilisés pour la réalisation d'articles moulés ou extrudés. Ils sont généralement utilisés sous forme de fils ou fibres, d'articles moulés à l'aide d'une presse à injecter, de films (articles extrudés et étirés) ou de récipients par exemple obtenus par un procédé d'extrusion-soufflage. Les propriétés des articles réalisés sont en grande partie liées aux propriétés thermomécaniques du polymère, telles que le module, la ductilité, la température de transition vitreuse, la température de déformation sous charge.

La température de déformation sous charge est une caractéristique importante pour l'utilisation des polyesters sous forme de bouteilles, plus particulièrement pour des bouteilles destinées à contenir des boissons. Pour des raisons de conservation et d'hygiène alimentaire, certaines boissons doivent être remplies à chaud dans les bouteilles, et éventuellement en absence d'oxygène. C'est notamment le cas pour les jus de fruits, les produits pasteurisés ou stérilisés, notamment les produits laitiers, les boissons au thé ou au café, la bière. Si la température de remplissage est trop élevée, et/ou si le liquide reste trop longtemps dans la bouteille au delà d'une certaine température, celle-ci est déformée. Cet inconvénient peut limiter le champ d'utilisation du polyester, en particulier du polyéthylène téréphtalate, pour contenir des boissons. Ainsi certaines boissons ne peuvent pas être conditionnées dans des bouteilles en polyéthylène téréphtalate, ou ne peuvent l'être que dans des conditions de température limitées.

On cherche donc toujours à élaborer des polyesters, des compositions à base de polyesters ou des procédés de mise en forme d'articles en polyesters, pour améliorer les propriétés thermomécaniques, en particulier la température de déformation sous charge soit améliorée.

Une première solution proposée consiste à utiliser un polyéthylène ou des copolymères comportant des unités naphtaliques et téréphtaliques. Cette solution est toutefois onéreuse, et elle n'est industriellement utilisée que pour des applications très spécifiques.

Une autre solution consiste à modifier le procédé de mise en forme des bouteilles afin de sur-cristalliser le polymère. Le procédé selon cette solution est généralement appelé "thermofixation". Brièvement, il consiste à cristalliser une bouteille en polyester en modifiant les opérations de soufflage. La mise en oeuvre de ce procédé requiert toutefois une importante modification des installations de fabrication des bouteilles demandant des investissements importants. En outre, ce procédé de sur cristallisation entraîne la cristallisation du col des bouteilles le rendant non translucide. Ceci peut constituer un défaut d'aspect.

La présente invention a pour objectif de proposer une utilisation permettant d'améliorer les propriétés thermomécaniques des polyesters, sans nécessité de modifications importantes des procédés de fabrication

A cet effet l'invention propose une composition à base de polyester caractérisée en ce qu'elle comprend une matrice à base de polyester choisi dans le groupe comprenant le polyéthylène téréphtalate, le polytriméthylène téréphtalate, le polybutylène térèphtalate, le polynaphatalène térèphtalate, les copolymères et mélanges à base de ces polyesters.et des particules minérales constituées par des oxydes métalliques de diamètre moyen compris entre 5 et 100 nm, de facteur de forme compris entre 1 et 10, à une concentration pondérale comprise entre 0,01% et 25%.

L'invention a également pour objet un procédé de préparation de compositions comprenant des particules d'oxyde métallique de taille nanométrique, un facteur de forme compris entre 1 et 10. à une concentration pondérale comprise en 0,01 et 25 % en poids comprenant les étapes suivantes:
a) Introduction dans un mélange d'au moins un diol avec au moins un acide dicarboxylique ou un ester d'acide dicarboxylique d'un sol d'oxyde métallique dont les particules ont un diamètre moyen inférieur ou égal à 100 nm
b) Estérification ou transestérification de l'acide ou de l'ester d'acide par le diol, Polycondensation sous vide du produit d'estérification,

Pour la mise en oeuvre du procédé de l'invention. La matrice de la composition peut être à base de tout polyester. Elle peut être constituée d'un seul polymère, le polyester, ou d'un mélange de polymères dont au moins un composant principal est un polyester. Elle peut aussi consister en un copolymère dont la majorité des motifs de répétition comprennent des fonctions ester.

Les polyesters convenables pour la réalisation de l'invention sont généralement obtenus par polycondensation à partir de diols et d'acides dicarboxyliques ou d'esters d'acides dicarboxyliques.

Parmi les diols convenables pour la réalisation de l'invention, on peut citer l'éthylène glycol, le propylène glycol, le 1,3-propanediol, le 1,4-butanediol, le 1,3-butanediol, le 2,2-dimethylpropanediol, le neopentyl-glycol, le 1,5-pentanediol, le 1,2-hexanediol, le 1,8-octanediol, le 1,10-deconediol, le 1,4-cyclohexanedimethanol, le 1,5-cyclohexanediméthanol, le 1,2-cyclohexanediméthanol, ou leurs mélanges.

Parmi les acides dicarboxyliques convenables pour la réalisation de l'invention on peut citer l'acide téréphtalique, l'acide isophtalique, l'acide orthophtalique, l'acide 2,5-naphtaléne dicarboxylique, l'acide 2,6-naphtalène dicarboxylique, l'acide 1.3-naphtalène dicarboxylique, l'acide 2,7-naphtalène dicarboxylique, l'acide méthyle téréphtalique, l'acide 4,4'-diphényldicarboxylique, l'acide 2,2'-diphényldicarboxylige, l'acide 4,4'-diphényletherdicarboxylique, l'acide 4,4'-diphényirnéthanecricarboxylique, l'acide 4,4'-diphénylsulphonedicarboxylique, l'acide 4,4'-diphényl-isopropylidène-dicarboxylique, l'acide sulfo-5-isophtalique, l'acide oxalique, l'acide succinique, l'acide adipique, l'acide sébacique, l'acide azélaïque, l'acide dodécanedicarboxylique, l'acide dimer, l'acide maléïque, l'acide fumarique et tous les diacides aliphatiques, l'acide cyclohexane dicarbolylique.

Les acides dicarboxyliques peuvent être introduits dans le milieu de polycondensation sous forme estérifiée, par exemple par un motif éthoxy ou par un motif méthoxy.

Les polyesters préférables pour la réalisation de l'invention sont le polyéthylène téréphtalate, le polytriméthylène téréphtalate, le polybutylène téréphtalate, le polynaphatalène téréphtalate, les copolymères et mélanges à base de ces polyesters.

Les particules minérales nanométriques convenables pour l'invention confèrent à la composition des propriétés mécaniques améliorées par rapport à une composition identique ne comprenant pas lesdites particules. La température de déformation sous charge est, par exemple, plus élevée.

Les particules selon l'invention présentent un faible facteur de forme, compris entre 1 et 10. Le facteur de forme est de préférence compris entre 1 et 2.

Par facteur de forme d'une particule, on entend le rapport entre la plus grande dimension d'une particule et la plus petite dimension. Par exemple, si des particules ont une forme plaquettaire, le facteur de forme est défini par le rapport entre la longueur des plaquettes et leur épaisseur. Si des particules ont une forme d'aiguille, le facteur de forme est défini par le rapport entre la longueur de l'aiguille de le diamètre de la section transversale de l'aiguille. Si des particules ont une forme sensiblement sphérique, on considère que la grande dimension est de taille égale à la petite dimension, le facteur de forme est égal à 1.

Par particules de taille nanométrique, on entend que la petite dimension est inférieure à 200 nm, et que la grande dimension est inférieure à 2000 nm, de préférence inférieur à 400 nm. Selon un mode de réalisation encore préférentiel, le petite dimension est inférieure à 100 nm et la grande dimension est inférieure à 200 nm.

Selon un mode de réalisation avantageux de l'invention les particules sont de forme sensiblement sphérique avec un diamètre moyen inférieur compris entre 5 et 100 nm.

Les particules minérales convenables pour l'information sont de préférence choisies parmi les particules à base d'oxydes de métaux, par exemple la silice, le dioxyde de titane, l'alumine, la zircone. Elle peuvent comporter un traitement ou revêtement de surface. De tels traitements peuvent par exemple être destinés à améliorer la dispersion des particules dans le polymère, à protéger les particules d'une détérioration, ou à protéger l'effet des particules sur le polymère. Tous les traitements de surface et dépôts connus dans le domaine des charges pour polymères, et en particulier connus et utilisés pour des charges de dimension supérieure à celles concernées par l'invention, peuvent être utilisés. On peut par exemple utiliser des particules de dioxyde de titane revêtue partiellement ou entièrement par un composé à base de silice.

Les particules à base de silice sont les charges préférées pour la mise en oeuvre de l'invention. Tous les types de silices connus peuvent être utilisés. A titre d'exemple, on peut citer les silices de combustion, les silices de précipitation, les sols de silice. L'utilisation des sols est particulièrement préférée pour l'obtention des compositions présentant une bonne dispersion des particules et conforme à l'invention.

La concentration pondérale en particules dans la composition est comprise entre 0,1 et 20%. Elle est, de préférence, comprise entre 5 et 15%.

Les charges sont introduites dans le polymère selon les méthodes connues d'introduction des charges minérales dans un polymère:

Ainsi, une première méthode consiste à introduire les particules dans le milieu de synthèse du polyester, généralement avant que la polymérisation ait débuté. La polymérisation est par la suite mise en oeuvre en présence des particules. Les particules peuvent être introduites sous forme de poudre ou sous forme d'une dispersion dans un milieu liquide.

Une deuxième méthode consiste à introduire les particules sous forme de poudre dans du polyester fondu et à mélanger par cisaillement afin d'obtenir une dispersion uniforme. Cette opération peut, par exemple, être réalisée à l'aide d'un mélangeur, à simple ou double vis.

Une troisième méthode consiste à introduire les particules sous forme de mélange maître dans le polymère fondu. Par mélange maître, on entend, une composition comprenant une concentration élevée en charges et une matrice polymérique compatible avec le polyester. Le mélange maître peut être réalisé selon l'une des méthodes précédentes. L'introduction du mélange maître dans le polymère fondu peut être réalisée à l'aide d'un dispositif de mélange par cisaillement.

Selon un mode de réalisation particulièrement avantageux de l'invention, les particules sont introduites sous forme de sol dans le milieu de synthèse du polyester. Le sol peut par exemple être un sol aqueux ou glycolique. Les sols de silices sont particulièrement adaptés à ce mode de réalisation.

Un procédé de préparation de compositions selon ce mode de réalisation comporte par exemple les étapes suivantes:
a) Introduction dans un mélange d'au moins un diol avec au moins un acide dicarboxylique ou un ester d'acide dicarboxylique d'un sol de silice dont les particules ont un diamètre moyen inférieur ou égal à 100 nm
b) Estérification ou transestérification de l'acide ou de l'ester d'acide par le diol,
c) Polycondensation sous vide du produit d'estérification,

Ce procédé de fabrication des compositions est classique, à l'exception de l'introduction du sol de silice. De tels procédés sont, par exemple, décrits dans Les techniques de l'ingénieur J 6020, 2151-2160.

L'étape b) d'estérification ou de transestérification est une étape communément réalisée dans les procédés industriels de fabrication de polyesters. Ces deux voies sont, par exemple, principalement employées pour la fabrication de poly(éthylène téréphtalate).

Ainsi la première voie d'obtention, dite "téréphtalate de méthyle" (DMT) est une réaction de transestérification. Le DMT fondu est solubilisé dans l'éthylène glycol (EG) présent en excès, le rapport molaire EG/DMT étant d'environ 1.9 à 2.2, et la réaction est menée à pression atmosphérique à des températures d'environ 130°C à 250°C. Elle nécessite la présence d'un catalyseur comme par exemple l'acétate de manganèse. Le méthanol dégagé par la réaction est éliminé par distillation. L'éthylène glycol présent en excès est éliminé par évaporation après la réaction de transestérification. Le catalyseur qui est aussi un catalyseur de la dégradation du polyester est bloqué à l'aide de composés phosphorés après la réaction. Le produit résultant de la transestérification est un mélange de bis-hydroxyéthyl-téréphtalate (BHET) et d'oligomères.

La seconde voie est dite "estérification directe". Il s'agit d'une réaction d'estérification de l'acide téréphtalique par l'éthylène glycol. Elle est effectuée à des températures de 130°C à 280°C. L'acide téréphtalique, fondu à ces températures, n'est pas soluble dans l'éthylène glycol mais l'est dans l'ester produit de la réaction. La solubilisation du réactif dans le milieu est donc progressive. L'éthylène glycol est présent avec un rapport molaire EG/Acide Téréphtalique d'environ 1 à 1,5. Il résulte de cette réaction un mélange d'oligomères ayant des fonctions terminales sous forme d'acide téréphtalique ou de téréphtalate d'hydroxyéthyle.

L'utilisation de ces procédés fait l'objet de nombreuses publications. Les conditions indiquées ci-dessus ne constituent pas une limitation à la portée de la présente invention.

Les étapes ultérieures de polycondensation sont généralement catalysées à l'aide de composés métalliques, par exemple par des composés de l'antimoine, du titane ou du germanium. Elles peuvent être catalysées par tout catalyseur de polycondensation des polyesters. Elles sont généralement réalisées sous pression réduite, afin de favoriser le départ de l'éthylène glycol formé au cours de la réaction de condensation.

Le polymère est ensuite mis en forme, par exemple par extrusion d'un jonc à travers un orifice, refroidissement, et granulation par découpe du jonc. La mise en forme est généralement précédées d'un filtrage en phase fondue. Les étapes de polycondensation en phase fondue et de mise en forme peuvent être suivies d'une étape de post-condensation en phase solide.

Les compositions, par exemple sous forme de granulés, peuvent être mises en forme pour la réalisation d'articles moulés. Elles peuvent plus particulièrement être utilisées pour la fabrication de bouteilles. Les procédés de fabrication de bouteilles à partir de polymères thermoplastiques sont convenables pour l'utilisation des compositions de l'invention. Le procédé de mise en forme par extrusion-soufflage est généralement préféré.

Les bouteilles ainsi obtenues à partir des compositions de l'invention peuvent être remplies par des liquides à température élevée et/ou des liquides restant chaud dans la bouteille pendant un temps prolongé. En effet, l'amélioration des propriétés thermomécaniques des compositions de l'invention permet de diminuer la déformation des bouteilles à des températures élevées.

D'autres détails ou avantages de l'invention apparaîtront plus clairement au vu des exemples donnés ci-dessous uniquement à titre indicatif.

Les caractéristiques des compositions de l'invention sont déterminées selon les méthodes suivantes :
- Indice de viscosité (IV, en ml/g): mesure selon la norme ISO 1628/5: mesure dans une solution de la composition à 0,5% dans un mélange phénol/orthodichlorobenzène 50/50 en poids, à 25°C. La concentration en polymère utilisée pour le calcul de l'indice de viscosité est la concentration réelle en polymère, tenant compte de la présence des particules dans la composition.
- Masse moléculaire en poids absolue (g/mol): mesure par Chromatographie par perméation de gel (GPC)
- Coloration selon le système CIE lab: mesure de 1*, a*, b*
- Propriétés thermomécaniques : module à 23°C, Module à 160°C, Température de transition vitreuse (Tg). Mesure en dynamique (Dynamical mecanic analysis) sur un appareil RSA, sur des éprouvettes de polymère de 40*4*2 mm, après séchage et cristallisation à 130°C sous vide pendant 16 heures.
- Température de déformation sous charge (HDT), évaluée selon la norme ISO 75-2.
- Cristallisation: on plastifie le polymère sec à 290°C de manière à détruire tout germe de cristallisation. On injecte le produit fondu dans un moule dont l'épaisseur varie progressivement pour obtenir des plaques d'épaisseur comprise entre 2 et 6 mm. La température des parois du moule est conditionnée à 37°C. On note à quelle épaisseur e apparait un léger trouble correspondant à un début de cristallisation.

### Exemple 1

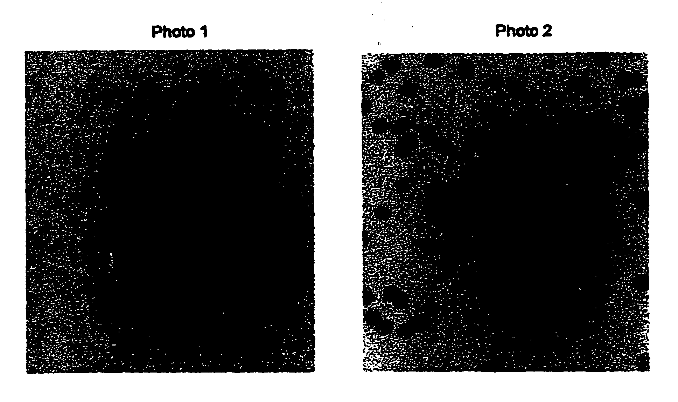

Dans un réacteur de polymérisation de 7,5 litres, permettant d'obtenir 3 kg de polymère par polycondensation, muni d'une agitation avec couplomètre pour suivre la viscosité du milieu réactionnel, de différents sas d'introduction, d'une colonne de distillation pour éliminer l'eau formée lors de l'estérification, ainsi que l'excès d'éthylène glycol, et d'un circuit de vide directe pour l'étape de polycondensation, on introduit:
- 2656 g d'acide téréphtalique (16,0 mol)
- 1190 g d'éthylène glycol (19,2 mol)
- 384 g d'un sol aqueux de nanoparticules de silices de 50 nm de diamètre, commercialisé par le société Hoechst sous la dénomination Klébosol® 40R50, correspondant à 143,6 g de silice.
Après purge à l'azote, le milieu réactionnel est chauffé à 275°C sous agitation et sous pression absolue de 6,6 bar.
Le temps d'estérification est de 66 minutes (durée nécessaire à la distillation de l'eau).
La pression est ensuite ramenée à la pression atmosphérique en 20 minutes.
On introduit une solution d'oxyde d'antimoine dans le milieu réactionnel (250 ppm en Sb, par rapport au polymère).
La pression est maintenue pendant 20 minutes à la pression atmosphérique, avant une mise sous vide progressive de 1 bar à moins de 1 mm de mercure en 90 minutes.
La masse réactionnelle est portée à 285°C lorsque la pression descend en dessous de 1 mm de mercure.
On définit le temps de polycondensation comme le temps nécessaire pour atteindre le niveau de viscosité visé à partir du moment où la pression est inférieure à 1 mm de mercure.
Le temps de polycondensation est de 32 minutes.
Une fois le niveau de viscosité visé atteint J'agitation est arrêtée et le réacteur est mis sous pression à 3 bars pour couler le polymère sous forme de joncs et découpe de joncs sous forme de granulés.
Les granulés de polymère sont séchés sous vide pendant 15 heures à 50°C.
Des photographie prise au Microscope Electronique à Transmission sont illustrées figures 1 et 3 correspondant respectivement à un grossissement de 20000 et de 100000.

Le polyester présente une HDT de 67°C, une Tg de 107°C et un module mesuré à 23°C égal à 1165 Mpa, à 160°C égal à 82 Mpa. Les autres caractéristiques du polymère sont rassemblées dans le tableau I.

### Exemple 2 (exemple comparatif)

L'exemple 1 est répété, à l'exception du sol de silice.
Le temps d'estérification est de 54 minutes avec un temps de polycondensation est de 67 minutes.
Le polyester obtenu présente une Tg de 99°C, une HDT de 59°C et des modules mesurés à 23°C de 988 Mpa et à 160°C de 61Mpa.

### Exemple 3

On prépare une composition selon l'exemple 1, en introduisant à la place de l'acide téréphtalique le mélange suivant d'acides:
- 2592 g d'acide téréphtalique
- 63,7 g d'acide isophtalique (correspondant à 2,4% en mol de la quantité totale d'acides)
Le temps d'estérification est de 65 minutes avec une durée de polycondensation de 42 minutes.
Les propriétés du polyester obtenues sont données dans le tableau 1.

### Exemple 4

On prépare une composition selon l'exemple 1, excepté en ce que le sol aqueux de particules de silice est un sol aqueux de nanoparticules de silice de 25 nm de diamètre, commercialisé par la société Hoechst sous la dénomination Klébosol® 30R25
Le temps d'estérification est de 68 minutes et la durée de polycondensation est de 32 minutes.
La composition obtenue présente une Tg de 107°C, avec une HDT de 67°C et des modules mesurées à 25°C et 160°C respectivement de 1195 Mpa et 88 Mpa.

### Exemple 5

On prépare, une composition selon l'exemple 1, excepté en ce qu'on introduit les composés suivants:
- 2592 g d'acide téréphtalique
- 63,7 g d'acide isophtalique (correspondant à 2,4% en mol de la quantité totale d'acides)
- 37 g d'éthylène glycol
- 1306 g d'un sol de silice glycolique à 11,8% de silice en poids, le sol étant synthétisé par un procédé dit de type Stöber, les particules de silices ayant un diamètre de 50 nm.
Le temps d'estérification est de 54 minutes, la durée de polycondensation est de 73 minutes.
La composition présente une Tg de 103°C et des modules mesurés à 23°C et 160°C respectivement de 1015 Mpa et 65 Mpa.

Certaines caractéristiques des compositions fabriquées dans les exemples 1 à 5 sont rassemblées dans le tableau I ci-dessous.

**Tableau I**

| Exemple | IV (ml/g) | 1* | a* | b* | Cristallisation (mm) |
|---|---|---|---|---|---|
| 1 | 67,0 | 54 | -0,4 | 2,1 | 2,5 |
| 2c | 79,5 | 72 | -0,9 | 6,5 | 4 |
| 3 | 71,1 | 66 | -2,3 | 6,4 | 3 |
| 4 | 62,4 | 59 | -1,5 | 9,1 | > 2 |
| 5 | 68,5 | 78 | -2,7 | 11,0 | 4,5 |

### Exemples 6 et 7

L'exemple 3 ci-dessus est reproduit en utilisant une quantité d'acide isophtalique correspondant à 1,9 % en mole de la quantité totale des acides téréphtalique et isophtalique.
La composition ainsi obtenue présente un IV de 72,1. Elle est utilisée pour la fabrication de bouteilles de capacité de 600 ml. Les bouteilles sont obtenues par mise en oeuvre d'un procédé d'injection/soufflage dans une machine intégrée ABS NISSEI F100.
Pour déterminer la résistance à la déformation à chaud de ces bouteilles, un test dit de "remplissage à chaud" est réalisé. Ce test consiste à remplir les bouteilles avec de l'eau à différentes températures et comparer le volume d'eau utilisé avec le volume nécessaire pour remplir une bouteille à froid. Plus la différence de volume est grande, moins le polymère est résistant à la déformation à chaud.
A titre de comparaison, des bouteilles ont été réalisées avec un polyester fabriqué selon le même procédé avec la même teneur en acide isophtalique mais sans charge nanoparticulaire de silice (exemple 7).
Les résultats du test de "remplissage à chaud" sur ces deux polymères sont indiqués dans le tableau II ci-dessous.

**Tableau II**

| Température | Exemple 6 | Exemple 7 (ml d'eau) |
|---|---|---|
| 70 | 50,6 | 76,6 |
| 75 | 70,3 | 109,6 |
| 80 | 129,1 | 149,1 |
| 85 | 176,6 | 205,8 |

### Exemple 8

Une composition polyester a été fabriquée selon le procédé de l'exemple 3, mais en utilisant 2,5% d'acide isophtalique et une quantité de sol aqueux de nanoparticules de silice Klebosol^{®} 40R50 pour obtenir une composition comprenant 5% en poids de SiO₂.
Le polyester présente un Indice de viscosité de 80,3 après cristallisation.
Une partie de ce polyester est soumise à une post-condensation en phase solide pour obtenir un indice de viscosité de 87,6.
Ces deux compositions ont été utilisées pour réaliser des bouteilles de contenance.
Un test dit de "Pasteurisation" a été réalisé pour déterminer leur résistance à la déformation à chaud.
Ce test consiste à remplir à froid une bouteille avec de l'eau carbonatée à 5,5 g de CO2/l puis bouchage de la bouteille. La bouteille utilisée présente un col de 28 mm et un corps cylindrique droit et lisse avec un fond pétaloïde. La bouteille est immergée dans un bain à 63°C avec une montée en température de 15 min et un maintien à la température pendant 15 min. La bouteille est ensuite refroidie pendant 10 min sous une douche pour un retour à la température ambiante. Le volume de la bouteille est déterminé avant le test et après le test de chauffage par remplissage de la bouteille avec de l'eau et pesée. La différence de volume entre ces deux mesures exprimée en % de variation (VRB) mesure la résistance à la déformation de celle-ci et donc du matériau utilisé.

Les résultats obtenus avec les deux compositions sont un VRB de 4,3% et 4,5% respectivement.

### Exemple 9

L'exemple 8 est répété mais en utilisant 6% d'acide isophtalique et comme charge nanométrique une silice Klebosol^{®} 30R25 pour obtenir une composition de polyester comprenant 5% du poids de SiO₂ et un indice de viscosité, après post-condensation en phase solide, égal à 86,4.
Le test de pasteurisation réalisé sur des bouteilles obtenues par mise en forme de cette composition donne un VRB de 4,8%.

### Exemple 10 (comparatif)

Un polyester comprenant 2,3 % en mole d'acide isophtalique obtenu selon le procédé de l'exemple 3, et ne contenant pas de charge nanométrique a été utilisé pour la fabrication de bouteilles selon les procédés de mise en forme utilisés dans les exemples 8 et 9.
Le polyester a un indice de viscosité de 100.
Le test de pasteurisation réalisé sur ces bouteilles conduit à un VRB de 6,5 %.

## Revendications

1. Composition à base de polyester présentant des propriétés thermomécaniques améliorées, **caractérisée en ce qu'**elle comprend une matrice à base de polyester choisi dans le groupe comprenant le polyéthylène téréphtalate, le polytriméthylène téréphtalate, le polybutylène téréphtalate, le polyethylène naphtalate, les mélanges et copolymères à bases de ces polyesters et des particules minérales à base d'oxydes métalliques de diamètre moyen compris entre 5 et 100 nm, de facteur de forme compris entre 1 et 10 et à une concentration pondérale comprise en 0,01 et 25 %.

2. Composition selon la revendication 1 **caractérisée en ce que** les particules sont à base d'un composé choisi parmi la silice, le dioxyde de titane, la zircone, l'alumine.

3. Composition selon l'une des revendications précédentes, **caractérisée en ce que** le polyester comporte un agent amorphisant.

4. Composition selon la revendication 3, **caractérisée en ce que** l'agent amorphisant est un comonomère du polyester.

5. Composition selon la revendication 4, **caractérisée en ce que** le comonomère est choisi parmi l'acide isophtalique, le 1,4-cyclohexanediol, le diéthylène glycol, et leurs mélanges, et **en ce qu'**il représente entre 1 et 20% en moles des motifs de répétitions dans le polyester.

6. Procédé de fabrication d'une composition à base de polyester comprenant des particules à base d'oxyde métallique de taille nanométrique, un facteur de forme compris entre 1 et 10, à une concentration pondérale comprise en 0,01 et 25 % en poids comprenant les étapes suivantes:
a) Introduction dans un mélange d'au moins un diol avec au moins un acide dicarboxylique ou un ester d'acide dicarboxylique d'un sol d'oxyde métallique dont les particules ont un diamètre moyen inférieur ou égal à 100 nm
b) Estérification ou transestérification de l'acide ou de l'ester d'acide par le diol,
c) Polycondensation sous vide du produit d'estérification,

7. Procédé selon la revendication 6 **caractérisé en ce que** le sol d'oxyde métallique est un sol de silice

8. Procédé selon la revendication 6 ou 7 **caractérisé en ce que** l'étape c) est réalisée en présente d'un catalyseur à base d'antimoine ou de titane.

9. Articles obtenus par mise en forme de compositions selon l'une des revendications 1 à 5.

10. Bouteilles obtenues par injection-soufflage à partir de compositions selon l'une des revendications 1 à 5.

11. Procédé de remplissage à chaud de bouteilles en polyester par un liquide, **caractérisé en ce que** les bouteilles sont fabriquées à partir de compositions selon l'une des revendications 1 à 5.

## Claims

1. Composition based on polyester having improved thermomechanical properties, **characterized in that** it comprises a matrix and inorganic particles based on polyester selected from the group comprising polyethylene terephthalate, polytrimethylene terephthalate, polybutylene terephthalate, polyethylene naphthalate, and mixtures and copolymers based on these polyesters, and inorganic particles based on metal oxides with an average diameter of between 5 and 100 nm, of aspect ratio between 1 and 10 and in a concentration by weight of between 0.01 and 25%.

2. Composition according to Claim 1, **characterized in that** the particles are based on a compound selected from silica, titanium dioxide, zirconia, alumina.

3. Composition according to either of the preceding claims, **characterized in that** the polyester includes an amorphizer.

4. Composition according to Claim 3, **characterized in that** the amorphizer is a comonomer of the polyester.

5. Composition according to Claim 4, **characterized in that** the comonomer is selected from isophthalic acid, 1,4-cyclohexanediol, diethylene glycol, and mixtures of these, and **in that** it represents between 1 and 20 mol% of the repeat units in the polyester.

6. Process for manufacturing a composition based on polyester, comprising particles based on a metal oxide of nanometric size, and an aspect ratio between 1 and 10, in a concentration by weight of between 0.01 and 25%, comprising the following steps:
a) introduction into a mixture of at least one diol with at least one dicarboxylic acid or an ester of a dicarboxylic acid of a metal oxide sol whose particles have an average diameter below or equal to 100 nm,
b) esterification or transesterification of the acid or of the ester of the acid by the diol,
c) polycondensation in vacuo of the esterification product.

7. Process according to Claim 6, **characterized in that** the metal oxide sol is a silica sol.

8. Process according to Claim 6 or 7, **characterized in that** step c) is carried out in the presence of a catalyst based on antimony or on titanium.

9. Products obtained by shaping compositions according to any of Claims 1 to 5.

10. Bottles obtained by injection blow moulding, starting from compositions according to any Claims 1 to 5.

11. Process for hot-filling polyester bottles with a liquid, **characterized in that** the bottles are manufactured from compositions according to one of Claims 1 to 5.

## Patentansprüche

1. Zusammensetzung auf Polyesterbasis, die verbesserte thermomechanische Eigenschaften aufweist, **dadurch gekennzeichnet, dass** sie eine Matrix auf Polyesterbasis, die aus der Gruppe von Polyethylenterephthalat, Polytrimethylenterephthalat, Polybutylenterephthalat, Polyethylennaphthalat, Gemischen und Copolymeren auf der Basis dieser Polyester ausgewählt ist, und mineralische Teilchen auf der Basis von Metalloxiden mit einem mittleren Durchmesser von 5 bis 100 nm, einem Formfaktor von 1 bis 10 und mit einer Konzentration von 0,01 bis 25 Gew.-% einschließt.

2. Zusammensetzung nach Anspruch 1, **dadurch gekennzeichnet, dass** die Teilchen auf der Basis einer Verbindung beruhen, ausgewählt aus Siliciumdioxid, Titandioxid, Zirkoniumoxid, Aluminiumoxid.

3. Zusammensetzung nach einem der vorhergehenden Ansprüche, **dadurch gekennzeichnet, dass** der Polyester ein amorph machendes Mittel einschließt.

4. Zusammensetzung nach Anspruch 3, **dadurch gekennzeichnet, dass** das amorph machende Mittel ein Comonomer des Polyesters ist.

5. Zusammensetzung nach Anspruch 4, **dadurch gekennzeichnet, dass** das Comonomer aus Isophthalsäure, 1,4-Cyclohexandiol, Diethylenglycol und ihren Gemischen ausgewählt ist und **dadurch**, dass es zwischen 1 bis 20 Mol-% Wiederholungseinheiten in dem Polyester aufweist.

6. Verfahren zur Herstellung einer Zusammensetzung auf Polyesterbasis, die Teilchen auf der Basis von Metalloxid von nanometrischer Größe mit einem Formfaktor von 1 bis 10 bei einer Konzentration von 0,01 bis 25 Gew.-% einschließt, das die folgenden Schritte umfasst:
a) Einbringen in ein Gemisch von mindestens einem Diol mit mindestens einer Dicarbonsäure oder einem Dicarbonsäureester eines Metalloxidsols, dessen Teilchen einen mittleren Durchmesser von kleiner oder gleich 100 nm aufweisen
b) Veresterung oder Umesterung der Säure oder des Säureesters mit dem Diol,
c) Polykondensation unter Vakuum des veresterten Produkts.

7. Verfahren nach Anspruch 6, **dadurch gekennzeichnet, dass** das Metalloxidsol ein Siliciumdioxidsol ist.

8. Verfahren nach Anspruch 6 oder 7, **dadurch gekennzeichnet, dass** der Schritt c) in Gegenwart eines Katalysators auf Antimon- oder Titanbasis durchgeführt wird.

9. Gegenstände, die durch Herstellen von Zusammensetzungen nach einem der Ansprüche 1 bis 5 erhalten werden.

10. Flaschen die durch Spritzblasen von Zusammensetzungen nach einem der Ansprüche 1 bis 5 erhalten werden.

11. Heißabfüllverfahren von Polyesterflaschen mit einer Flüssigkeit, **dadurch gekennzeichnet, dass** die Flaschen aus Zusammensetzungen nach einem der Ansprüche 1 bis 5 hergestellt sind.
